# FASCICULE DE BREVET EUROPEEN

(11) **EP 1 448 675 B1**
(45) Date de publication et mention de la délivrance du brevet: **07.01.2009**
(21) Numéro de dépôt: 02795352.0
(22) Date de dépôt: 29.10.2002
(51) Int. Cl.: C08G 77/38, C07F 7/08

(54) **PROCEDE DE PREPARATION D'HUILES SILICONES PORTANT UN GROUPEMENT CONTENANT AU MOINS UN CYCLE HYDROCARBONE DANS LEQUEL EST INCLUS UN ATOME D'OXYGENE**
VERFAHREN ZUR HERSTELLUNG VON SAUERSTOFF-ENTHALTENDE CYCLISCHE KOHLENWASSERSTOFFGRUPPEN ENTHALTENDEN SILIKONÖLEN
METHOD FOR PREPARING SILICONE OILS BEARING A GROUP CONTAINING AT LEAST A HYDROCARBON CYCLE WHEREIN IS INCLUDED AN OXYGEN ATOM

(30) Priorité: 30.10.2001 FR 0114039
(43) Date de publication de la demande: 25.08.2004
(73) Titulaire: Bluestar Silicones France, 69486 Lyon Cedex 03 (FR)
(72) Inventeur: BLANC-MAGNARD, Delphine, F-69007 Lyon (FR); STERIN, Sébastien, F-69450 St-Cyr au Mont d'Or (FR)
(86) Numéro de dépôt international: PCT/FR2002/003715
(87) Numéro de publication internationale: WO 2003/037961

(56) Documents cités:
- EP-A- 0 277 023
- EP-B- 0 545 591
- EP-B- 0 578 354
- FR-A- 2 749 850
- FR-A- 2 750 349
- FR-A- 2 813 081

## Description

La présente invention concerne un nouveau procédé de préparation d'huiles silicones modifiées par des groupements contenant au moins un cycle hydrocarboné dans lequel est inclus au moins un atome d'oxygène. Plus précisément, la présente invention a pour objet un procédé d'hydrosilylation entre des composés organohydrogénosiliciés et des synthons contenant au moins une fonction insaturée et au moins un cycle hydrocarboné dans lequel est inclus un atome d'oxygène dans lequel le phénomène de gélification issue de la polymérisation des cycles incluant un atome d'oxygène est inhibé.

Les réactions entre des polyorganohydrogénosiloxanes et des oléfines ou des hydrocarbures acétyléniques sont très connues. Les polyorganohydrogénosiloxanes sont, par exemples de formules: Me₃SiO-(MeHSiO)ₙ-(Me₂SiO)ₘ- SiMe₃ où 1≤ n ≤ 1000 et 0 <m ≤ 1000, et Me₂HSiO-(MeHSiO)ₒ-(Me₂SiO)ₚ- SiHMe₂ où 0< o ≤ 1000 et 0 < p ≤ 1000.

De nombreux synthons peuvent fonctionnaliser les polyorganohydrogénosiloxanes; par exemple, on utilise comme synthons des alcènes, des styrènes, des allylalcools, des allyloxyethers ou des allylamines.

Ces réactions sont très couramment utilisées pour la synthèse d'huiles silicones fonctionnalisées et les huiles obtenues ont des applications dans des domaines très divers tels que l'anti-adhérence et la lubrification. Par exemple, on peut préparer des huiles silicones fonctionnalisées avec des synthons de 1,2-époxy-4-vinyl-cyclohexane; les huiles silicones fonctionnalisées obtenues sont ensuite réticulables par voie thermique en présence d'un catalyseur acide (HCl, H₂SO₄), ou par voie photochimique en présence, par exemple, d'un photoamorceur cationique.

De nombreuses compositions catalytiques sont décrites dans la littérature pour les réactions d'hydrosilylation; elles peuvent notamment contenir des métaux tels que le platine, le rhodium, le cobalt ou le palladium. Des exemples spécifiques de telles compositions catalytiques sont les halogénures de platine et les halogénures de rhodium, par exemple H₂PtCl₆, PtCl₂, (RhCl₃,xH₂O) les complexes de platine avec des siloxanes ayant des groupes insaturés, les complexes de platine avec des oléfines et complexes cationiques de platine avec des nitriles comme ligands. L'une des plus employées industriellement est la composition catalytique de Karstedt décrite notamment dans le brevet US 3,775,452; cette composition de Karstedt est constituée de complexes de platine dont le degré d'oxydation formel et réel est de zéro (0) et de formule :

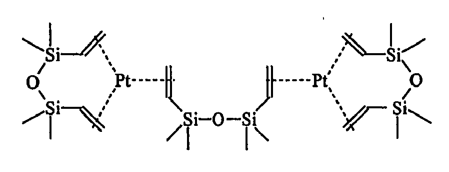

Toutefois, les procédés d'hydrosilylation classiques de l'art antérieur ne sont pas ou peu adaptés pour les réactions d'hydrosilylation entre des polyorganohydrogénosiloxanés et des synthons contenant un cycle dans lequel est inclus un atome d'oxygène (époxyde, etc.). Ce dernier a tendance à s'ouvrir et à provoquer des réactions de polymérisation et de réticulation (gélification, formation de gomme et/ou de résine) non contrôlés des huiles fonctionnalisées, lesquelles sont initiées par la présence des compositions catalytiques habituelles qui catalysent aussi la polymérisation de cycles incluant un atome d'oxygène.

FR-A-27 49 850 décrit un procédé d'hydrosilylation d'une huile silicone avec des synthons contenant un cycle hydrocarboné dans lequel est inclus un atome d'oxygène, ladite réaction étant effectuée en présence d'une composition catalytique hétérogène.

La Demanderesse a mis au point un nouveau procédé de préparation des huiles silicones fonctionnalisées par hydrosilylation qui permet d'inhiber l'ouverture de cycle incluant un atome d'oxygène présent sur le synthon insaturé.

Selon le procédé d'hydrosilylation de la présente invention, le composé organohydrogénosilicié est mis à réagir avec des synthons différents ou identiques contenant un cycle hydrocarboné dans lequel est inclus au moins un atome d'oxygène. Cette réaction est effectuée en présence d'un système catalytique homogène comprenant **(i)** au moins un métal, de préférence complexé, choisi parmi le groupe constitué de cobalt, rhodium, ruthénium, platine, palladium et/ou nickel et **(ii)** au moins un composé organique hétérocyclique choisi parmi les lactones, lactames, carbonates cycliques et carbamates cycliques.

De préférence, les composés organiques hétérocycliques comprennent au moins 5 atomes au sein du cycle et sont choisis parmi ceux de formule ci-dessous : 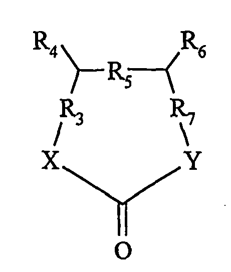 dans laquelle :
- le groupement X représente O, NR₈,
- le groupement Y représente O, NR₉, ou une valence libre,
- les groupements R₃, R₅, R₇, identiques ou différents, représentent (i) une valence libre, (ii) un radical alkylène linéaire ou ramifié, saturé ou insaturé et pouvant être substitué,
- les groupements R₄, et R₆, identiques ou différents, représentent (i) un atome d'hydrogène, (ii) un radical linéaire ou ramifié, saturée ou insaturée et pouvant être substitué, (iii) un radical alkylène linéaire ou ramifié, saturé ou insaturé et pouvant être substitué, ou (iv) forment un cycle hydrocarboné saturé ou insaturé, linéaire ou ramifiée pouvant être substitué.

A titre d'exemples, les composés hétérocycliques peuvent être choisis parmi ceux de formules ci-dessous :

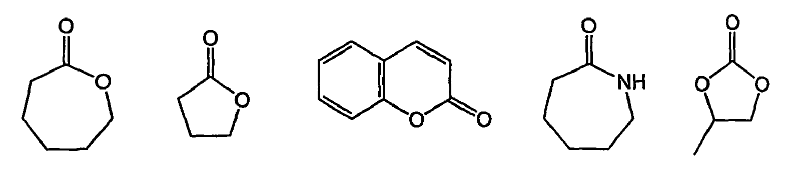

D'autres composés sont décrits dans "*Synthesis of* lactones and *lactams*" de Michael A Ogliaruso et James F Wolfe [©1993, John Wilrey & Sons].

De préférence, le métal au sein du système catalytique est le platine, en particulier de degré d'oxydation zéro. A titre d'exemples, on citera notamment les platines complexés de type Karstedt.
Les composés organohydrogénosiliciés utilisés au sein du procédé selon l'invention sont de deux types; les silanes décrits ci-dessous et les polyhydrogénosiloxanes décrit ci-dessous.

Les silanes répondent à la formule Si( R₈)₄₋ₙH avec 1 ≤n≤ 3 et R₈, identiques ou différents, réprésentant un radical alkyle, un radical aryle, un radical alkylaryle, un radical arylalkyle, un halogène (de préférence, le chlore), un radical alkoxy, un radical aryloxy, un radical alkylaryloxy ou un radical arylalkyloxy.

Les polyorganohydrogénosiloxanes utilisés dans les procédés selon l'invention sont de nature très diverse. Ces polyorganohydrogénosiloxanes peuvent être linéaires ou cycliques et ont pour formules moyennes : 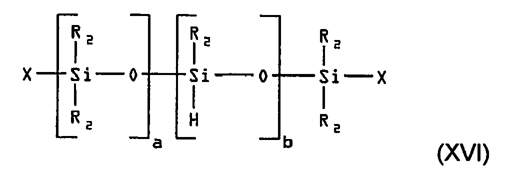 et/ou 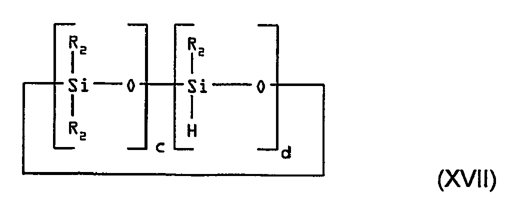 dans lesquelles :
■ les symboles **R₂** sont identiques ou différents et correspondent à un radical hydrocarboné monovalent choisi parmi le radical phényle et les radicaux alkyles linéaires ou ramifiés ayant de 1 à 6 atomes de carbone, de préférence 1 à 3 atomes de carbone;
■ les symboles **X** sont identiques ou différents et correspondent à un radical monovalent choisi parmi **R₂,** un atome d'hydrogène, un radical méthoxy, et un radical éthoxy;
■ a et b sont des nombres entiers ou fractionnaires, tels que :
   - 0 < a ≤ 200 de préférence 0 < a ≤ 99
   - 0 ≤ b ≤ 200, de préférence 1 < b ≤ 100, et au moins un des deux X correspondant au radical hydrogène si b = 0;
   - 5 < a+b ≤ 200, de préférence 10 < a+b ≤ 100
■ c et d sont des nombres entiers ou fractionnaires, tels que
   - 0 < c < 5, de préférence 0 < c < 3
   - 1 < d < 10, de préférence 1 < d < 5,
   - 3 < c + d <10, de préférence 3 < c + d < 5

Les synthons contiennent au moins un cycle hydrocarboné dans lequel est inclus un atome d'oxygène et ont pour formule :
■ (1) 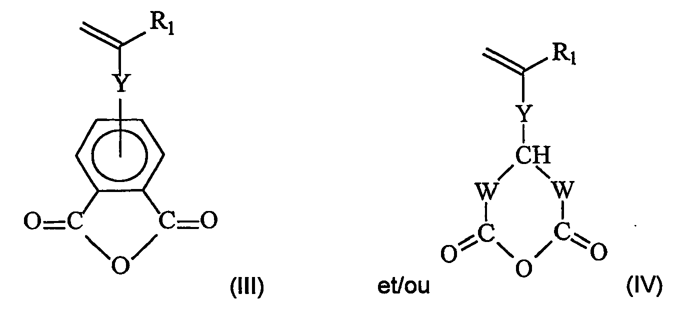 dans lesquelles :
   ■ les symboles **W,** identiques ou différents, correspondent à un radical hydrocarboné divalent choisi parmi les radicaux alkylènes linéaires ou ramifiés ayant de 1 à 12 atomes de carbone, un des symboles **W** pouvant être une valence libre;
   ■ le symbole **Y** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
   ■ le symbole **R₁** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ (2) 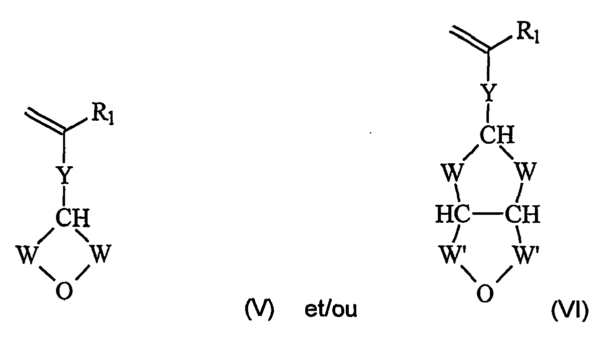 dans lesquelles :
   ■ les symboles **W,** identiques ou différents, correspondent à un radical hydrocarboné divalent choisi parmi les radicaux alkylènes linéaires ou ramifiés ayant de 1 à 12 atomes de carbone et pouvant contenir au moins une fonction hydroxyle; un des symboles **W** pouvant être une valence libre pour (V) et les deux symboles **W** pouvant être simultanément une valence libre pour (VI);
   ■ les symboles **W',** identiques ou différents, correspondent à un radical hydrocarboné divalent choisi parmi les radicaux alkylènes linéaires ou ramifiés ayant de 1 à 12 atomes de carbone; au moins un des symboles **W'** pouvant être une valence libre;
   ■ le symbole Y correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
   ■ le symbole **R₁** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle; et
■ (3) 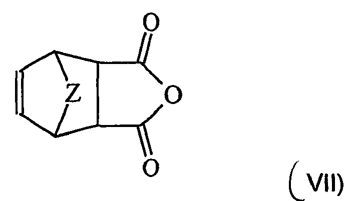 dans laquelle le symbole **Z** correspond à un radical divalent choisi parmi un atome de carbone ou un hétéroatome.

De préférence, le cycle hydrocarboné dans lequel est inclus l'atome d'hydrogène comporte au plus 8 atomes dans ledit cycle. De plus, on obtient les meilleurs résultats en accord avec le procédé d'hydrosilylation de l'invention avec des synthons ne contenant qu'un cycle hydrocarboné dans lequel est inclus un atome d'oxygène. En particulier, les synthons utilisés et donnant de bons résultats (voir exemples ci-dessous) ont pour formule : 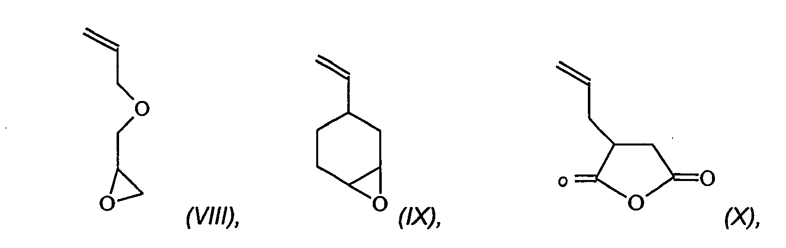 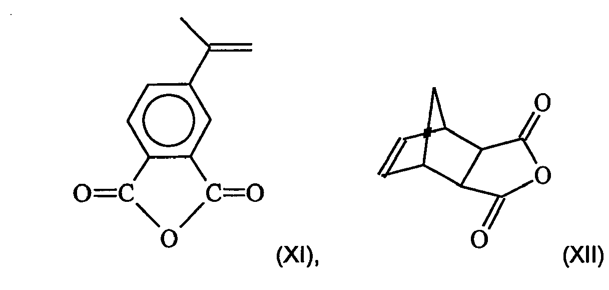 et

En général, les synthons réagissant avec le polyorganohydrogénosiloxane sont des synthons identiques. Le rapport nombre de motifs SiH vis-à-vis du nombre de moles de synthons est compris entre 0,01 et 100, de préférence entre 0,1 et 10.

Le procédé selon l'invention peut être mis en oeuvre selon diverses variantes. Notamment, il est possible d'utiliser une mise en oeuvre dans laquelle l'ensemble des réactifs et le système catalytique sont mélangés dans le milieu réactionnel (type "batch"). Le système catalytique peut être aussi bien préparé avant utilisation (formulation "*one pot*") ou préparé au sein du milieu réactionnel.

Dans le cadre de ses essais expérimentaux, la Demanderesse a mis au point un procédé avantageux en accord avec cette mise en oeuvre. Ce procédé d'hydrosilylation entre un polyorganohydrogénosiloxane et un synthon insaturé comporte les étapes suivantes :
(a) introduction dans le milieu réactionnel du système catalytique dont :
   - la teneur en métal est de 5 à 5000 ppm, de préférence de 10 à 100 ppm par rapport à la masse totale des réactifs,
   - et le rapport molaire du composé hétérocyclique vis-à-vis du métal est compris entre 10 et 10 000, de préférence entre 100 et 1000;
(b) introduction dans le milieu réactionnel du synthon;
(c) ledit milieu est chauffé à une température comprise entre 25°C et 200°C, et de préférence entre 50°C et 160°C;
(d) le polyorganohydrogénosiloxane est ensuite introduit sur une durée comprise entre 0 et 24 heures, de préférence entre 2,5 et 5 heures; le rapport du nombre de motifs SiH vis-à-vis du nombre de moles de synthons étant compris entre 0,1 et 10.

Selon un mode préférentiel de ce procédé, l'étape (b) est effectuée avant l'étape (a).

Ce procédé avantageux peut être effectué en masse, ce qui signifie que la réaction entre le polyorganohydrogénosiloxane et le synthon s'effectue en l'absence de solvant. Toutefois, de nombreux solvants tels que le toluène, le xylène, l'octaméthyltétrasiloxane, le cyclohexane ou l'hexane peuvent être utilisés. Le cas échéant, l'huile silicone fonctionnalisée obtenue est finalement dévolatilisée.

Le taux d'époxy dosé des huiles obtenues selon l'invention est très élevé et le rapport taux d'époxy dosé/ taux d'époxy théorique est compris entre 0,95 et 1, ce taux d'époxy théorique correspondant au taux de ≡SiH dosé sur le composé organohydrogénosilicié avant réaction.

Les huiles silicones selon l'invention du fait de leurs propriétés sont donc employées comme additif (par exemple, à titre de diluant) ou comme composant principal pour la formulation de compositions réticulables mise en oeuvre pour préparer des encres, des vernis et/ou des revêtements; les revêtements étant de préférence des revêtements anti-adhérents pour papier, verre, plastique et/ou métal.

En général, ces compositions réticulables comprennent un amorceur, une résine organique et/ou silicone à fonctionnalité époxy et/ou acrylate; en outre, ces compositions peuvent comprendre un diluant et/ou un solvant. Ces compositions sont réticulables selon les cas thermiquement, sous rayonnement U.V et/ou sous faisceau d'électrons.

### EXEMPLES

Les exemples ci-dessous mettent en évidence certains des avantages du procédé de préparation d'huiles silicones fonctionnalisées selon la présente invention.

Les exemples 1 à 4 concernent la synthèse d'huiles silicones fonctionnalisées époxy obtenues selon le procédé de l'invention.

Les exemples 1' à 3' concernent la synthèse d'huiles silicones fonctionnalisées époxy selon des modus operandi présentés à titre comparatif.

La concentration en platine est calculée par rapport à la masse totale du mélange alcène+huile SiH.

Le dosage des fonctions époxydes sur les huiles fonctionnalisées obtenues est mesuré à l'aide d'un appareil potentiométrique type 716 DMS Titrino de Metrohm selon la méthode de I.M. Kolthoff et P.J. Elving ("Trease on Analytical Chemistry", part II, vol.14, p. 288).

### Exemple 1.

Dans un réacteur de 100 mL, 21,48 g (173 mmol) de 1,2-époxy-4-vinyl-cyclohexane (ci après VCMX) et 21,5 mg (1000 ppm en poids de VCMX soit 0,19 mmol) de ε-caprolactone sont placés.

Le mélange réactionnel est chauffé à 70°C sous agitation. 5,5 µL (10 ppm) d'une solution de catalyseur de Karstedt à 10% en platine sont ajoutés dans le réacteur et 35 g (157,3 mmol) d'heptaméthylhydrogénotrisiloxane sont ensuite coulés goutte à goutte en 3 heures sur le VCMX.

Au bout de 5 heures de réaction, le taux de transformation des motifs SiH est de 100%, et 1% des fonctions époxydes ont disparu. La réaction est alors stoppée.

La viscosité du brut de réaction à 25°C est mesurée : v = 5,6 mPa/s.

### Exemple 2.

Dans un réacteur de 100 mL, 21,48 g (173 mmol) de VCMX et 21,5 mg (1000 ppm en poids de VCMX soit 0,25 mmol) de γ-butyrolactone sont placés. Le mélange réactionnel est chauffé à 70°C sous agitation. 5,5 µL (10 ppm) d'une solution de catalyseur de Karstedt à 10% en platine sont ajoutés dans le réacteur, et 35 g (157,3 mmol) d'heptaméthylhydrogénotrisiloxane sont ensuite coulés goutte à goutte en 3 heures sur le VCMX.

Au bout de 5 heures de réaction, le taux de transformation des motifs SiH est de 100% et 1,8% des fonctions époxydes ont disparu. La réaction est alors stoppée.

La viscosité du brut de réaction à 25°C est mesurée : v = 6 mPa/s.

### Exemple 3.

21,48 g (173 mmol) de VCMX et 28 mg (1280 ppm en poids de VCMX soit 0,187 mmol) de coumarine en solution (10% poids / volume de toluène) sont placés dans un réacteur de 100 mL. Le mélange réactionnel est chauffé à 70°C sous agitation. 5,5 µL (10 ppm) d'une solution de catalyseur de Karstedt à 10% en platine sont ajoutés dans le réacteur et 35 g (157,3 mmol) d'heptaméthylhydrogénotrisiloxane sont ensuite coulés goutte à goutte en 3 heures sur le VCMX.

Au bout de 7 heures de réaction, le taux de transformation des motifs SiH est supérieur à 99,9% et 2% des fonctions époxydes ont disparu. La réaction est alors stoppée.

La viscosité du brut de réaction à 25°C est mesurée : v = 6 mPa/s.

### Exemple 4.

21,48 g (173 mmol) de VCMX et 21,5 mg (1000 ppm en poids de VCMX soit 0,190 mmol) de ε-caprolactame sont placés dans un réacteur de 100 mL. Le mélange réactionnel est chauffé à 70°C sous agitation. 5,5 µL (10 ppm) d'une solution de catalyseur de Karstedt à 10% en platine sont ajoutés dans le réacteur et 35 g (157,3 mmol) d'heptaméthylhydrogénotrisiloxane sont ensuite coulés goutte à goutte en 3 heures sur le VCMX.

Au bout de 7 heures de réaction le taux de transformation des motifs SiH est de 97,3% et 2% des fonctions époxydes ont disparu.

### Exemple 1'.

21,48 g (173 mmol) de VCMX sont placés dans un réacteur de 100 mL. Le mélange réactionnel est chauffé à 70°C sous agitation. 5,5 µL (10 ppm) d'une solution de catalyseur de Karstedt à 10% en platine sont ajoutés dans le réacteur et 35 g (157,3 mmol) d'heptaméthylhydrogénotrisiloxane sont ensuite coulés goutte à goutte en 3 heures sur le VCMX.

Au bout de 5 heures de réaction, le taux de transformation des motifs SiH est de 99% mais 12 % des fonctions époxydes ont disparu. Au bout de 7 heures de réaction, le taux de transformation des motifs SiH est de 99,3% et 23 % des fonctions époxydes ont disparu. La réaction est alors stoppée.

La viscosité du brut de réaction à 25°C est mesurée : v = 38 mPa/s. Cette valeur est six fois plus élevée que celle de l'exemple 1; ceci démontre qu'une partie des fonctions époxydes présentes dans le mileu ont polymérisées au cours de la réaction d'hydrosilylation en présence du catalyseur de Karstedt seul.

### Exemple 2'.

21,48 g (173 mmol) de VCMX et 18,5 mg (860 ppm en poids de VCMX soit 0,189 mmol) de cyclohexanone sont placés dans un réacteur de 100 mL. Le mélange réactionnel est chauffé à 70°C sous agitation. 5,5 µL (10 ppm) d'une solution de catalyseur de Karstedt à 10% en platine sont ajoutés dans le réacteur et 35 g (157,3 mmol) d'heptaméthylhydrogénotrisiloxane sont ensuite coulés goutte à goutte en 3 heures sur le VCMX.

Au bout de 3 heures de réaction, le taux de transformation des motifs SiH est de 93,8% et 4,4% des fonctions époxydes ont disparu Au bout de 5 heures de réaction, le taux de transformation des motifs SiH est de 98,4% et 9,9% des fonctions époxydes ont disparu. Au bout de 7 heures de réaction, le taux de transformation des motifs SiH est de 98,8% et 19,5 % des fonctions époxydes ont disparu.

La réaction est alors stoppée. La viscosité du brut de réaction à 25°C est mesurée: v = 28 mPa/s. Cette exemple montre que la cyclohexanone ne permet pas d'éviter la polymérisation d'une partie des fonctions époxydes au cours de la réaction.

### Exemple 3'.

21,48 g (173 mmol) de VCMX et 24,5 mg (1140 ppm en poids de VCMX soit 0,188 mmol) de caproate de méthyle sont placés dans un réacteur de 100 mL. Le mélange réactionnel est chauffé à 70°C sous agitation. 5,5 µL (10 ppm) d'une solution de catalyseur de Karstedt à 10% en platine sont ajoutés dans le réacteur et 35 g (157,3 mmol) d'heptaméthylhydrogénotrisiloxane sont ensuite coulés goutte à goutte en 3 heures sur le VCMX.

Au bout de 3 heures de réaction, le taux de transformation des motifs SiH est de 92% et 2 % des fonctions époxydes ont disparu. Au bout de 5 heures de réaction, le taux de transformation des motifs SiH est de 99,2% et 4,7 % des fonctions époxydes ont disparu. Au bout de 7 heures de réaction, le taux de transformation des motifs SiH est de 99,4% mais 8 % des fonctions époxydes ont disparu. La réaction est alors stoppée.

La viscosité du brut de réaction à 25°C est mesurée: v = 8,4 mPa/s. Cette expérience montre que le caproate de méthyle ne permet pas d'éviter qu'une partie des fonctions époxydes présentes dans le milieu polymérise au cours de la réaction.

## Revendications

1. Procédé de préparation d'huile silicone fonctionnalisée par hydrosilylation de synthons en présence d'au moins un composé organohydrogénosilicié **caractérisé en ce que :**
(1) les synthons hydrosilylés avec le composé organohydrogénosilicié sont différents ou identiques, et contiennent au moins un cycle hydrocarboné dans lequel est inclus au moins un atome d'oxygène,
(2) ladite réaction d'hydrosilylation est effectuée en présence d'un système catalytique homogène comprenant (i) un métal, de préférence complexé, choisi parmi le groupe constitué de cobalt, rhodium, ruthénium, platine et nickel et (ii) un composé organique hétérocyclique choisi parmi les lactones, lactames, carbonates cycliques et carbamates cycliques.

2. Procédé selon la revendication précédente **caractérisé en ce que** le composé organosilicié est un polyorganohydrogénosiloxane, linéaire ou cyclique, de formules moyennes : 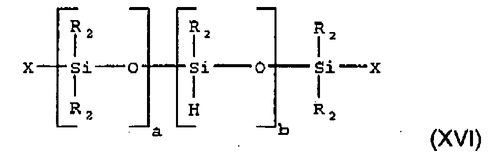 et/ou 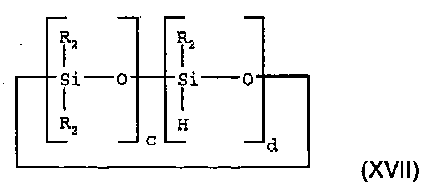 dans lesquelles :
■ les symboles **R₂** sont identiques ou différents et correspondent à un radical hydrocarboné monovalent choisi parmi le radical phényle et les radicaux alkyles linéaires ou ramifiés ayant de 1 à 6 atomes de carbone, de préférence 1 à 3 atomes de carbone;
■ les symboles **X** sont identiques ou différents et correspondent à un radical monovalent choisi parmi **R₂,** un atome d'hydrogène, un radical méthoxy, et un radical éthoxy;
■ a et b sont des nombres entiers ou fractionnaires, tels que :
- 0 < a ≤ 200, de préférence 0 < a ≤ 99,
- 0 ≤ b ≤ 200, de préférence 1 < b ≤ 100,
- et au moins un des deux X correspondant au radical hydrogène si b = 0,
- 5 < a+b ≤ 200, de préférence 10 < a+b ≤ 100
■ c et d sont des nombres entiers ou fractionnaires, tels que :
- 0 < c < 5, de préférence 0 < c < 3,
- 1 < d < 10, de préférence 1 < d < 5,
- 3 < a+b < 10, de préférence 3 < a+b < 5.

3. Procédé selon la revendication 1 **caractérisé en ce que** le composé organohydrogénosilicié est un silane de formule Si( R₈)₄₋ₙH avec 1 ≤n≤ 3 et R₈, identiques ou différents, réprésentant un radical alkyle, un radical aryle, un radical alkylaryle, un radical arylalkyle, un halogène (de préférence, le chlore), un radical alkoxy, un radical aryloxy, un radical alkylaryloxy ou un radical arylalkyloxy.

4. Procédé selon l'une quelconque des revendications précédentes **caractérisé en ce que** le composé organique hétérocyclique comprend au moins 5 atomes au sein du cycle et est choisi parmi ceux de formule ci-dessous : 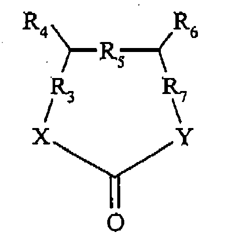 dans laquelle :
- le groupement X représente O, NH,
- le groupement Y représente O, NH, ou une valence libre,
- les groupements R₃, R₅, R₇, identiques ou différents, représentent (i) une valence libre, (ii) un radical alkylène linéaire ou ramifié, saturé ou insaturé et pouvant être substitué,
- les groupements R₄, et R₆, identiques ou différents, représentent (i) un atome d'hydrogène, (ii) un radical linéaire ou ramifié, saturée ou insaturée et pouvant être substitué, (iii) un radical alkylène linéaire ou ramifié, saturé ou insaturé et pouvant être substitué, ou (iv) forment un cycle hydrocarboné saturé ou insaturé, linéaire ou ramifiée pouvant être substitué.

5. Procédé selon l'une quelconque des revendications précédentes, **caractérisé en ce que** le métal du système catalytique est le platine.

6. Procédé selon l'une quelconque des revendications précédentes, **caractérisé en ce que** la quantité de métal du système catalytique est comprise entre 1 et 1000 ppm par rapport au poids du composé organohydrogénosilicié.

7. Procédé selon l'une quelconque des revendications précédentes, **caractérisé en ce que** les synthons contiennent au moins un cycle hydrocarboné dans lequel est inclus un atome d'oxygène, les synthons ayant pour formule :
■ (1) 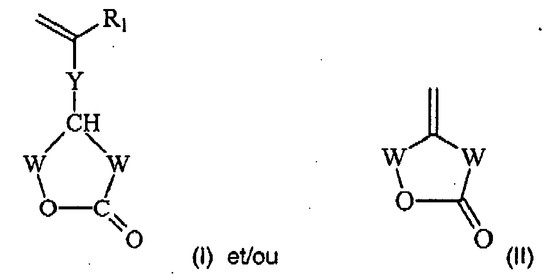 dans lesquelles :
■ les symboles **W** sont identiques ou différents et correspondent à un radical hydrocarboné divalent choisi parmi les radicaux alkylènes linéaires
ou ramifiés ayant de 1 à 12 atomes de carbone, un des symboles W pouvant être une valence libre;
■ le symbole **Y** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
■ le symbole **R₁** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ (2) 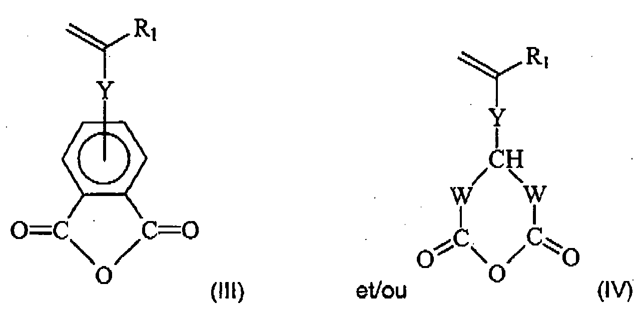 dans lesquelles :
■ les symboles **W** sont identiques ou différents et correspondent à un radical hydrocarboné divalent choisi parmi les radicaux alkylènes linéaires ou ramifiés ayant de 1 à 12 atomes de carbone, un des symboles **W** pouvant être une valence libre;
■ le symbole **Y** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
■ le symbole **R₁** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle; et,
■ (3) 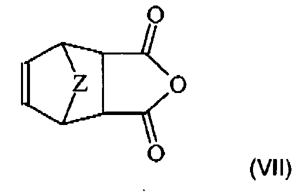 dans laquelle :
■ le symbole **Z** correspond à un radical divalent choisi parmi un atome de carbone ou un hétéroatome.

8. Procédé selon la revendication précédente **caractérisé en ce que** le cycle hydrocarboné des synthons comporte au plus 8 atomes dans ledit cycle.

9. Procédé selon l'une quelconque des revendications 7 ou 8, **caractérisé en ce que** le synthon a pour formule :

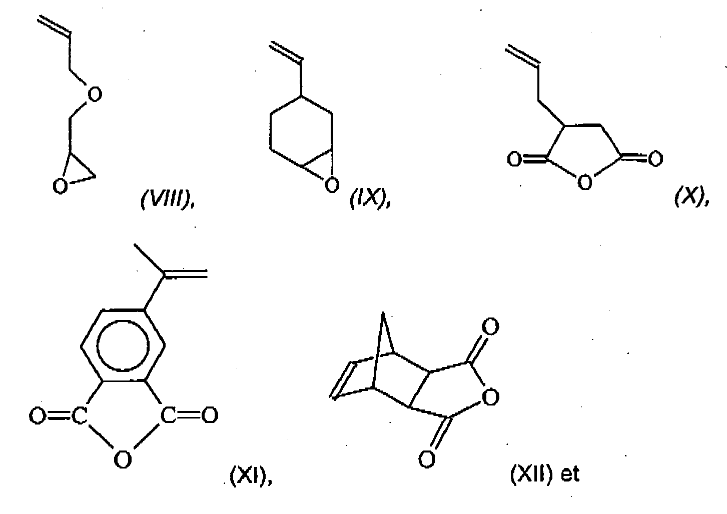

10. Procédé selon l'une quelconque des revendications précédentes, **caractérisé en ce que** les synthons réagissant avec le composé organohydrogénosilicié sont des synthons identiques.

11. Procédé selon l'une quelconque des revendications précédentes, **caractérisé en ce que** le rapport molaire composé organohydrogénosilicié / synthons est compris entre 0,01 et 100, de préférence entre 0,1 et 10.

12. Procédé selon l'une quelconque des revendications précédentes, **caractérisé en ce que** le composé organohydrogénosilicié et le synthon réagissent dans le milieu réactionnel en l'absence de solvant.

13. Système catalytique homogène comprenant:
(i) au moins un métal choisi parmi le groupe constitué de cobalt, rhodium, ruthénium, platine, palladium et/ou nickel, et
(ii) au moins un composé organique hétérocyclique choisi parmi les lactones, lactames, carbonates cycliques et carbamates cycliques,
ledit système catalytique étant **caractérisé en ce que** le composé organique hétérocyclique comprend au moins 5 atomes au sein du cycle et est choisi parmi ceux de formule ci-dessous : 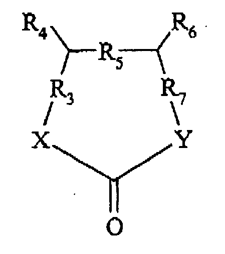 dans laquelle :
- le groupement X représente O, NH,
- le groupement Y représente O NH, ou une valence libre,
- les groupements R₃, R₅, R₇, identiques ou différents, représentent (i) une valence libre, (ii) un radical alkylène linéaire ou ramifié, saturé ou insaturé et pouvant être substitué,
- les groupements R₄, et R₆, identiques ou différents, représentent (i) un atome d'hydrogène, (ii) un radical linéaire ou ramifié, saturée ou insaturée et pouvant être substitué, (iii) un radical alkylène linéaire ou ramifié, saturé ou insaturé et pouvant être substitué, ou (iv) forment un cycle hydrocarboné saturé ou insaturé, linéaire ou ramifiée pouvant être substitué.

14. Utilisation d'un système catalytique selon la revendication 13 pour la préparation d'huiles silicones fonctionnalisées avec un groupement réactif contenant au moins un cycle hydrocarboné dans lequel est inclus un atome d'oxygène.

## Claims

1. Process for the preparation of a functionalized silicone oil by hydrosilylation of synthons in the presence of at least one organohydrosilicon compound, **characterized in that:**
(1) the synthons hydrosilylated with the organohydrosilicon compound are identical or different, and comprise at least one hydrocarbon-comprising ring in which is included at least one oxygen atom,
(2) the said hydrosilylation reaction is carried out in the presence of a homogeneous catalytic system comprising (i) a metal, preferably a complexed metal, chosen from the group consisting of cobalt, rhodium, ruthenium, platinum and nickel and (ii) a heterocyclic organic compound chosen from lactones, lactams, cyclic carbonates and cyclic carbamates.

2. Process according to the preceding claim, **characterized in that** the organosilicon compound is a linear or cyclic polyorganohydrosiloxane of mean formulae: 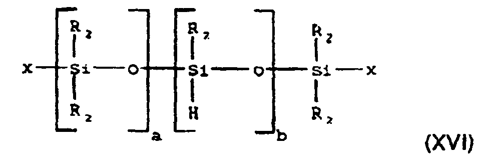 and/or 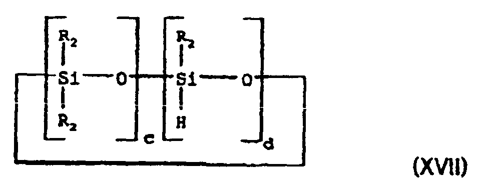 in which:
■ the symbols **R₂** are identical or different and correspond to a monovalent hydrocarbon-comprising radical chosen from the phenyl radical and linear or branched alkyl radicals having from 1 to 6 carbon atoms, preferably 1 to 3 carbon atoms;
■ the symbols **X** are identical or different and correspond to a monovalent radical chosen from **R₂,** a hydrogen atom, a methoxy radical and an ethoxy radical;
■ a and b are integers or fractions, such that:
- 0 < a ≤ 200, preferably 0 < a ≤ 99,
- 0 ≤ b ≤ 200, preferably 1 < b ≤ 100,
- and at least one of the two X groups corresponds to the hydrogen radical if b = 0,
- 5 < a + b ≤ 200, preferably 10 < a + b ≤ 100;
■ c and d are integers or fractions, such that:
- 0 < c < 5, preferably 0 < c < 3,
- 1 < d < 10, preferably 1 < d < 5,
- 3 < a + b < 10, preferably 3 < a + b < 5.

3. Process according to Claim 1, **characterized in that** the organohydrosilicon compound is a silane of formula Si(R₈)₄₋ₙH with 1 ≤ n ≤ 3 and R₈, which are identical or different, representing an alkyl radical, an aryl radical, an alkylaryl radical, an arylalkyl radical, a halogen (preferably chlorine), an alkoxy radical, an aryloxy radical, an alkylaryloxy radical or an arylalkyloxy radical.

4. Process according to any one of the preceding claims, **characterized in that** the heterocyclic organic compound comprises at least 5 atoms within the ring and is chosen from those of the formula below: 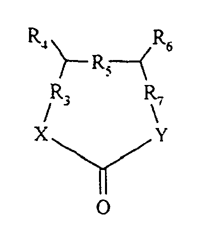 in which:
- the X group represents O or NH,
- the Y group represents O, NH or a free valency,
- the R₃, R₅ and R₇ groups, which are identical or different, represent (i) a free valency or (ii) a saturated or unsaturated and linear or branched alkylene radical which can be substituted,
- the R₄ and R₆ groups, which are identical or different, represent (i) a hydrogen atom, (ii) a saturated or unsaturated and linear or branched radical which can be substituted, (iii) a saturated or unsaturated and linear or branched alkylene radical which can be substituted, or (iv) form a saturated or unsaturated and linear or branched hydrocarbon-comprising ring which can be substituted.

5. Process according to any one of the preceding claims, **characterized in that** the metal of the catalytic system is platinum.

6. Process according to any one of the preceding claims, **characterized in that** the amount of metal in the catalytic system is between 1 and 1000 ppm with respect to the weight of the organohydrosilicon compound.

7. Process according to any one of the preceding claims, **characterized in that** the synthons comprise at least one hydrocarbon-comprising ring in which is included an oxygen atom, the synthons having the formula:
■ (1) 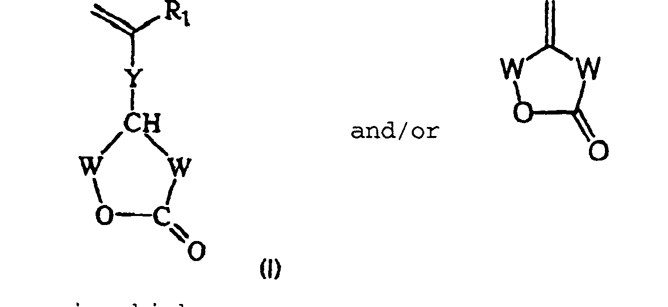 in which:
■ the symbols **W** are identical or different and correspond to a divalent hydrocarbon-comprising radical chosen from linear or branched alkylene radicals having from 1 to 12 carbon atoms, it being possible for one of the symbols **W** to be a free valency;
■ the symbol **Y** corresponds to a free valency or a divalent radical chosen from linear or branched alkylene radicals having from 1 to 12 carbon atoms which can comprise a heteroatom, preferably an oxygen atom;
■ the symbol **R₁** corresponds to a hydrogen atom or monovalent hydrocarbon-comprising radical chosen from linear or branched alkyl radicals having from 1 to 12 carbon atoms and preferably a hydrogen atom or a methyl radical;
■ (2) 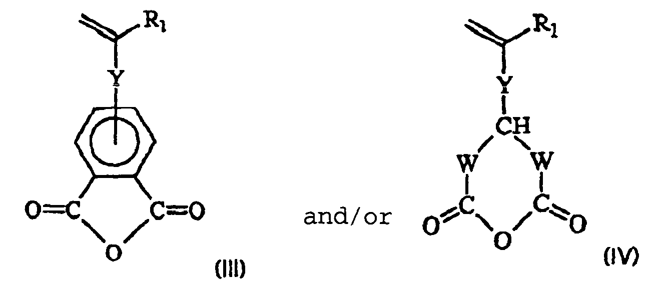 in which:
■ the symbols **W** are identical or different and correspond to a divalent hydrocarbon-comprising radical chosen from linear or branched alkylene radicals having from 1 to 12 carbon atoms, it being possible for one of the symbols **W** to be a free valency;
■ the symbol **Y** corresponds to a free valency or a divalent radical chosen from linear or branched alkylene radicals having from 1 to 12 carbon atoms which can comprise a heteroatom, preferably an oxygen atom;
■ the symbol **R₁** corresponds to a hydrogen atom or monovalent hydrocarbon-comprising radical chosen from linear or branched alkyl radicals having from 1 to 12 carbon atoms and preferably a hydrogen atom or a methyl radical; and
■ (3) 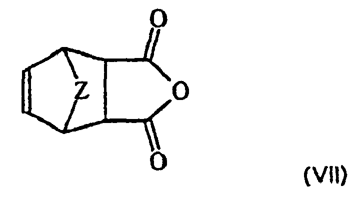 in which:
■ the symbol **Z** corresponds to a divalent radical chosen from a carbon atom or a heteroatom.

8. Process according to the preceding claim, **characterized in that** the hydrocarbon-comprising ring of the synthons comprises at most 8 atoms in the said ring.

9. Process according to either one of claims 7 and 8, **characterized in that** the synthon has the formula:

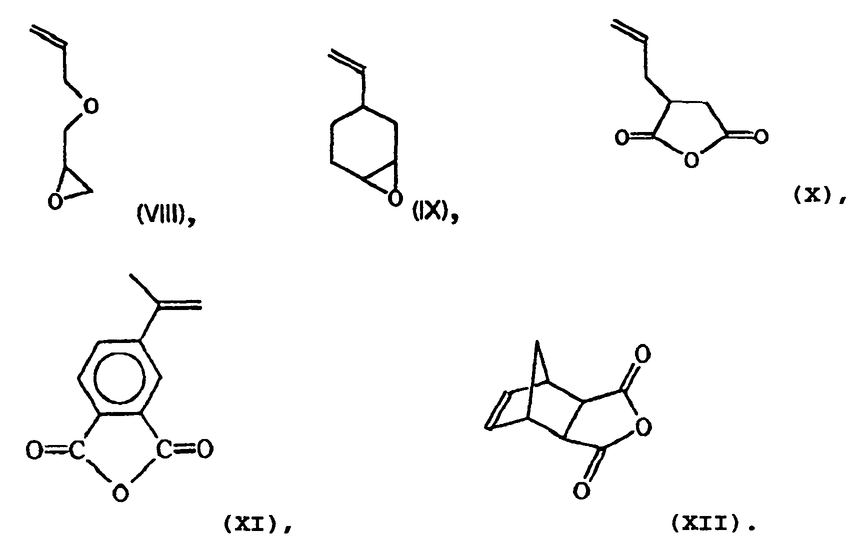

10. Process according to any one of the preceding claims, **characterized in that** the synthons which react with the organohydrosilicon compound are identical synthons.

11. Process according to any one of the preceding claims, **characterized in that** the organohydrosilicon compound/synthons molar ratio is between 0.01 and 100, preferably between 0.1 and 10.

12. Process according to any one of the preceding claims, **characterized in that t**he organohydrosilicon compound and the synthon react in the reaction mixture in the absence of solvent.

13. Homogeneous catalytic system comprising:
(i) at least one metal chosen from the group consisting of cobalt, rhodium, ruthenium, platinum, palladium and/or nickel, and
(ii) at least one heterocyclic organic compound chosen from lactones, lactams, cyclic carbonates and cyclic carbamates, the said catalytic system being **characterized in that** the heterocyclic organic compound comprises at least 5 atoms within the ring and is chosen from those of the formula below: 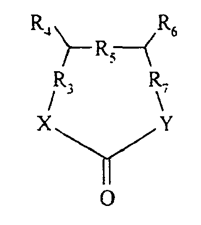 in which:
- the X group represents O or NH,
- the Y group represents O, NH or a free valency,
- the R₃, R₅ and R₇ groups, which are identical or different, represent (i) a free valency or (ii) a saturated or unsaturated and linear or branched alkylene radical which can be substituted,
- the R₄ and R₆ groups, which are identical or different, represent (i) a hydrogen atom, (ii) a saturated or unsaturated and linear or branched radical which can be substituted, (iii) a saturated or unsaturated and linear or branched alkylene radical which can be substituted, or (iv) form a saturated or unsaturated and linear or branched hydrocarbon-comprising ring which can be substituted.

14. Use of a catalytic system according to Claim 13 in the preparation of silicone oils functionalized with a reactive group comprising at least one hydrocarbon-comprising ring in which is included an oxygen atom.

## Patentansprüche

1. Verfahren zur Herstellung von funktionalisiertem Siliconöl durch Hydrosilylierung von Synthonen in Anwesenheit von mindestens einer Organohydrogenosilicium-Verbindung, **dadurch gekennzeichnet, dass**
(1)die Synthone, hydrosilyliert mit der Organohydrogensilicium-Verbindung, gleich oder verschieden sind und mindestens einen Kohlenwasserstoff-Ring enthalten, in dem mindestens ein Sauerstoffatom eingeschlossen ist,
(2)die genannte Reaktion der Hydrosilylierung in Anwesenheit eines homogenen katalytischen Systems durchgeführt wird, das umfasst: (i) ein Metall, vorzugsweise als Komplex, gewählt aus der Gruppe, die Cobalt, Rhodium, Ruthenium, Platin und Nickel umfasst und (ii) eine heterocyclische organische Verbindung, ausgewählt unter den Lactonen, Lactamen, cyclischen Carbonaten und cyclischen Carbamaten.

2. Verfahren nach dem vorstehenden Anspruch, **dadurch gekennzeichnet, dass** die Organosilicium-Verbindung ein lineares oder cyclisches Polyorganohydrogenosiloxan der mittleren Formel 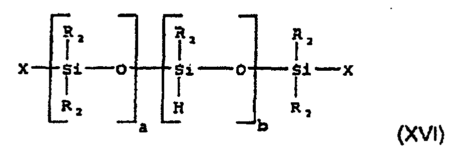 und/oder 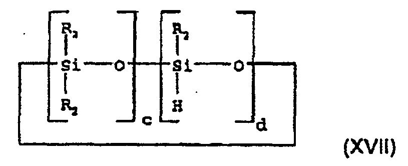 ist, in denen
■ die Symbole R, gleich oder verschieden sind und einem monovalenten Kohlenwasserstoff-Rest entsprechen, ausgewählt unter dem Rest Phenyl und den linearen oder verzweigten Resten Alkyl mit 1 bis 6 Kohlenstoffatomen, vorzugsweise 1 bis 3 Kohlenstoffatomen,
■ die Symbole X gleich oder verschieden sind und einem monovalenten Rest entsprechen, ausgewählt unter R₂, einem Wasserstoffatom, einem Rest Methoxy und einem Rest Ethoxy;
■ a und b ganze oder gebrochene Zahlen sind, wie
- 0 < a ≤ 200, vorzugsweise 0 < a ≤ 99,
- 0 ≤ b ≤ 200, vorzugsweise 1 < b ≤ 100,
- und mindestens eines der zwei X einem Wasserstoff-Rest entspricht, wenn b = 0 ist,
- 5 < a+b ≤ 200, vorzugsweise 10 < a+b ≤ 100,
■ c und d ganze oder gebrochene Zahlen sind, wie
- 0 < c < 5, vorzugsweise 0 < c < 3,
- 1 < d < 10, vorzugsweise 1 < d < 5,
- 3 < a+b < 10, vorzugsweise 3 < a+b < 5.

3. Verfahren nach Anspruch 1, **dadurch gekennzeichnet, dass** die Organohydrogenosilicium-Verbindung ein Silan der Formel Si(R₈)₄₋ₙH ist mit 1 ≤ n ≤ 3 und R₈, gleich oder verschieden, einen Rest Alkyl, einen Rest Aryl, einen Rest Alkylaryl, einen Rest Arylalkyl, ein halogen (vorzugsweise Chlor), einen Rest Alkoxy, einen Rest Aryloxy, einen Rest Alkylaryloxy oder einen Rest Arylalkyloxy darstellt.

4. Verfahren nach irgendeinem der vorstehenden Ansprüche, **dadurch gekennzeichnet, dass** die heterocyclische organische Verbindung mindestens 5 Atome im Inneren des Ringes umfasst und ausgewählt wird unter denen der nachstehenden Formel: 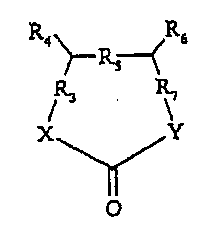 in der
- die Gruppe X darstellt: O, NH,
- die Gruppe Y darstellt: O, NH oder eine freie Valenz,
- die Gruppen R₃, R₅, R₇, gleich oder verschieden, darstellen:
(i) eine freie Valenz, (ii) einen linearen oder verzweigten, gesättigten oder ungesättigten Rest Alkylen, der substituiert sein kann,
- die Gruppen R₄ und R₆, gleich oder verschieden, darstellen:
(i) ein Wasserstoffatom, (ii) einen linearen oder verzweigten, gesättigten oder ungesättigten Rest, der substituiert sein kann, (iii) einen linearen oder verzweigten, gesättigten oder ungesättigten Rest Alkylen, der substituiert sein kann, oder (iv) einen linearen oder verzweigten, gesättigten oder ungesättigten Kohlenwasserstoff-Ring bilden, der substituiert sein kann.

5. Verfahren nach irgendeinem der vorstehenden Ansprüche, **dadurch gekennzeichnet, dass** das Metall des katalytischen Systems Platin ist.

6. Verfahren nach irgendeinem der vorstehenden Ansprüche, **dadurch gekennzeichnet, dass** die Menge des Metalls des katalytischen Systems zwischen einschließlich 1 und 1000 ppm beträgt, bezogen auf das Gewicht der Organohydrogenosilicium-Verbindung.

7. Verfahren nach irgendeinem der vorstehenden Ansprüche, **dadurch gekennzeichnet, dass** die Synthone mindestens einen Kohlenwasserstoff-Ring enthalten, in dem ein Sauerstoffatom eingeschlossen ist, wobei die Synthone die folgende Formel besitzen:
■ (1) 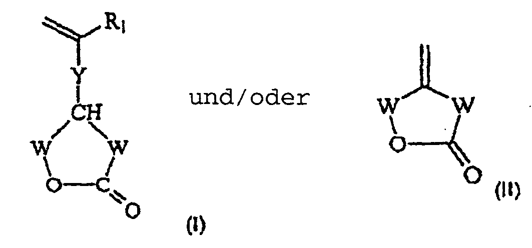 in denen
■ die Symbole W gleich oder verschieden sind und einem divalenten Kohlenwasserstoff-Rest entsprechen, ausgewählt unter den linearen oder verzweigten Resten Alkylen mit 1 bis 12 Kohlenstoffatomen, wobei eines der Symbole W eine freie Valenz sein kann,
■ das Symbol Y einer freien Valenz oder einem divalenten Rest entspricht, ausgewählt unter den linearen oder verzweigten Resten Alkylen mit 1 bis 12 Kohlenstoffatomen, die ein Heteroatom, vorzugsweise ein Sauerstoffatom enthalten können;
■ das Symbol R₁ einem Wasserstoffatom oder einem monovalenten Kohlenwasserstoff-Rest entspricht, ausgewählt unter den linearen oder verzweigten Resten Alkyl mit 1 bis 12 Kohlenstoffatomen, und vorzugsweise einem Wasserstoffatom oder einem Rest Methyl;
■ (2) 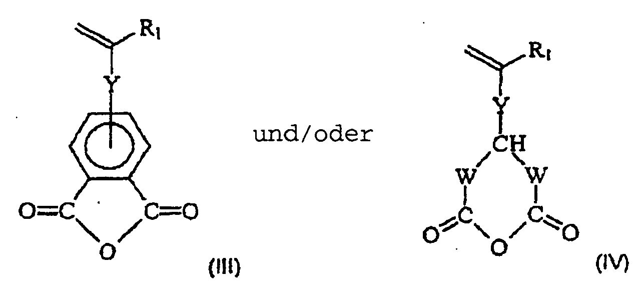 in denen
■ die Symbole W gleich oder verschieden sind und einem divalenten Kohlenwasserstoff-Rest entsprechen, ausgewählt unter den linearen oder verzweigten Resten Alkylen mit 1 bis 12 Kohlenstoffatomen, wobei eines der Symbole W eine freie Valenz sein kann,
■ das Symbol Y einer freien Valenz oder einem divalenten Rest entspricht, ausgewählt unter den linearen oder verzweigten Resten Alkylen mit 1 bis 12 Kohlenstoffatomen, die ein Heteroatom, vorzugsweise ein Sauerstoffatom enthalten können;
■ das Symbol R₁ einem Wasserstoffatom oder einem monovalenten Kohlenwasserstoff-Rest entspricht, ausgewählt unter den linearen oder verzweigten Resten Alkyl mit 1 bis 12 Kohlenstoffatomen, und vorzugsweise einem Wasserstoffatom oder einem Rest Methyl; und
■ (3) 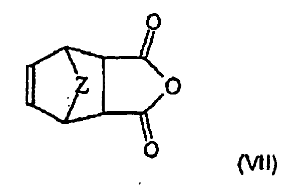 in der
■ das Symbol Z einem divalenten Rest entspricht, ausgewählt unter einem Kohlenstoffatom oder einem Heteroatom.

8. Verfahren nach dem vorstehenden Anspruch, **dadurch gekennzeichnet, dass** der Kohlenwasserstoff-Ring der Synthone höchstens 8 Atome in dem genannten Ring umfasst.

9. Verfahren nach einem der Ansprüche 7 oder 8, **dadurch gekennzeichnet, dass** das Synthon die Formel besitzt:

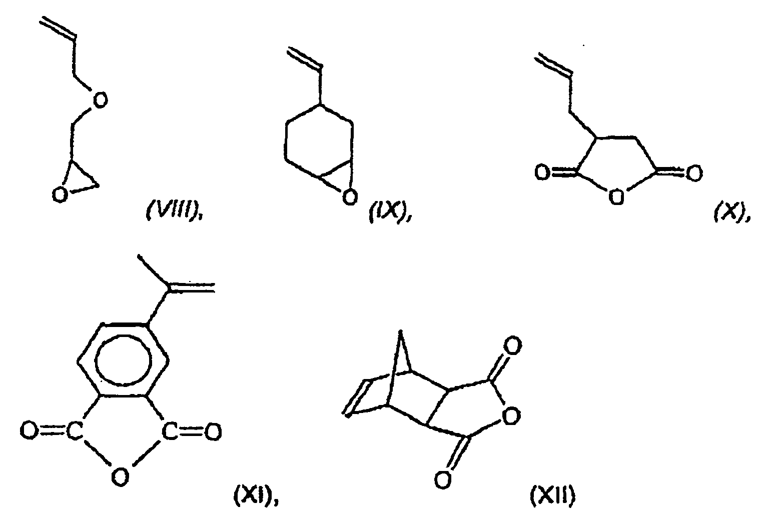

10. Verfahren **durch gekennzeichnet, dass** dass synthone, die mit der Organohydrogenosilicium-Verbindung reagieren, identische Synthone sind.

11. Verfahren nach irgendeinem der vorstehenden Ansprüche, **dadurch gekennzeichnet, dass** das molare Verhältnis Organohydrogenosilicium-Verbindung / Synthone zwischen einschließlich 0,01 und 100, vorzugsweise zwischen 0,1 und 10 beträgt.

12. Verfahren nach irgendeinem der vorstehenden Ansprüche, **dadurch gekennzeichnet, dass** die Organohydrogenosilicium-Verbindung und das Synthon in dem Reaktionsmedium bei Abwesenheit von Lösungsmittel reagieren.

13. Homogenes katalytisches System, umfassend:
(i) mindestens ein Metall, gewählt aus der Gruppe, die Cobalt, Rhodium, Ruthenium, Platin, Palladium und/oder Nickel umfasst, und
(ii) mindestens eine heterocyclische organische Verbindung, ausgewählt unter den Lactonen, Lactamen, cyclischen Carbonaten und cyclischen Carbamaten,
wobei das genannte katalytische System **dadurch gekennzeichnet ist, dass** die heterocyclische organische Verbindung mindestens 5 Atome im Inneren des Ringes umfasst und ausgewählt wird unter denen der nachstehenden Formel: 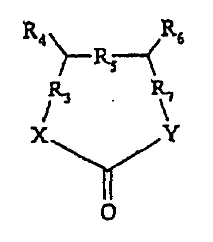 in der
- die Gruppe X darstellt: O, NH,
- die Gruppe Y darstellt: O, NH oder eine freie Valenz,
- die Gruppen R₃, R₅, R₇, gleich oder verschieden, darstellen:
(i) eine freie Valenz, (ii) einen linearen oder verzweigten, gesättigten oder ungesättigten Rest Alkylen, der substituiert sein kann,
- die Gruppen R₄ und R₆, gleich oder verschieden, darstellen:
(i) ein Wasserstoffatom, (ii) einen linearen oder verzweigten, gesättigten oder ungesättigten Rest, der substituiert sein kann, (iii) einen linearen oder verzweigten, gesättigten oder ungesättigten Rest Alkylen, der substituiert sein kann, oder (iv) einen linearen oder verzweigten, gesättigten oder ungesättigten Kohlenwasserstoff-Ring bilden, der substituiert sein kann.

14. Verwendung eines katalytischen Systems nach Anspruch 13 für die Herstellung von Siliconölen, funktionalisiert mit einer reaktiven Gruppe, die mindestens einen Kohlenwasserstoff-Ring enthält, in dem ein Sauerstoffatom eingeschlossen ist.
